# EUROPÄISCHE PATENTSCHRIFT

(11) **EP 3 766 766 B1**
(45) Veröffentlichungstag und Bekanntmachung des Hinweises auf die Patenterteilung: **06.10.2021**
(21) Anmeldenummer: 20183982.6
(22) Anmeldetag: 03.07.2020
(51) Int. Cl.: B62D 35/00, B62D 37/02

(54) **AKTIVE RADLUFTABWEISERANORDNUNG**
ACTIVE WHEEL AIR DEFLECTOR ASSEMBLY
AGENCEMENT ACTIF DE DÉFLECTEUR D'AIR DE ROUE

(30) Priorität: 19.07.2019 DE 102019210771
(43) Veröffentlichungstag der Anmeldung: 20.01.2021
(73) Patentinhaber: Magna Exteriors GmbH, 63877 Sailauf (DE)
(72) Erfinder: KNAUER, Bernd, 70199 Stuttgart (DE); KLEINFELD, Stefan, 50737 Köln (DE); LINDBERG, Braendon, Oxford, MI 48371 (US)
(74) Vertreter: Rausch, Gabriele

(56) Entgegenhaltungen:
- WO-A1-2017/103357
- WO-A1-2017/153662
- FR-A1- 2 858 793
- US-A1- 2019 168 826

## Beschreibung

Die vorliegende Erfindung bezieht sich auf eine aktive Radluftabweiseranordnung für die Befestigung an einem Kraftfahrzeug, die mindestens einen Aktuator, Radluftabweiser für die Vorderräder des Kraftfahrzeugs und verschwenkbare Halterungen für die Radluftabweiser aufweist.

### HINTERGRUND DER ERFINDUNG

Bei Fahrzeugen kommt es zu einem erheblichen Verlust der aerodynamischen Effizienz, insbesondere durch den Luftstrom unter und um ein Fahrzeug. Herkömmliche Konstruktionen, wie z.B. feste Platten oder feste Luftleitbleche aus flexiblen Materialien, sind bekannt und erfüllen nicht die gewünschten Anforderungen. Feste Luftleitbleche sind immer noch ein Kompromiss, da sie nicht auf die optimale Höhe gebracht werden können, um ihre Funktion zu erfüllen, ohne dass sie bei Fahrten mit geringem Bodenabstand beschädigt werden. Dementsprechend wurden aktive Frontluftabweiserbaugruppen entwickelt, wie sie in der EP 3 154 845 B1 beschreiben werden. In diesem Stand der Technik wird eine Baugruppe, die sich entlang der Breite des Fahrzeuges erstreckt verschwenkbar ausgestaltet.

Es besteht jedoch nicht nur der Wunsch nach einem verbesserten aktiven Frontabweiser, der eine aerodynamische Oberfläche für eine verbesserte Aerodynamik im Einsatz bietet, der unter vorgegebenen Bedingungen bewegt werden kann, sondern auch der Wunsch nach einem Radluftabweiser.

Aus der JP3094575 B2 sind ausfahrbare Klappen an den Radkästen zur Verbesserung der Laufleistung eines Autos bei hoher Geschwindigkeit bekannt. Dabei wird ein Zahnrad von einem Motor angetrieben, um eine Zahnstange anzutreiben und so Klappen zu versenken oder anzuheben. Die Klappe ist dabei unlösbar mit ihrer Befestigung verbunden.

Bei einer Beschädigung ausschließlich des Radluftabweisers muss der Radluftabweiser sowie sein Halter ausgetauscht werden, was zu erhöhtem Reparaturaufwand führt.

Aus der WO2017/098 106 A1 ist ein Radluftabweisersystem bekannt, das mit einem festen Rahmen am Fahrzeug befestigt ist. Innerhalb des Rahmens ist eine verschwenkbare Anströmschale angebracht, die über einen internen Antrieb mit einem Reibrad oder einer Zahnstange um eine am Rahmen angebundenen Achse verschwenkt wird. Der Rahmen ist nicht verschenkbar und weist keine Verbindungselemente zur Anströmschale auf.

Aus der DE 10 2017 214 769 A1 ist einen Radspoiler-Vorrichtung bekannt, die mit einem Viergelenkgetriebe angesteuert wird. dabei werden mehrere Verschwenkachsen verwendet. Der Anströmkörper ist mit einem Verbindungsbereich schwenkbar verbunden.

DE 10 2015 012 874 A1 zeigt eine Luftleiteinrichtung mit einer Rastschienen mit einer Mehrzahl an Rastelementen sowie einem damit über entsprechenden Rastelementen verbundenes Innenteil.

Aus der DE 10 2016 206 118 A1, DE 10 2009 014 368 A1, WO 2017/153662 und DE 37 41 048 A1 sind Verbindungen von Bauteilen am Fahrzeug bekannt, die unterschiedliche Verbindungsmechanismen aufweisen.

Bei einer Verwendung der aktiven Radluftabweiseranordnung an anderen Fahrzeugen und Stoßfänger-/Unterbodenkonturen muss sowohl der Radluftabweiser als auch der Halter an den Fahrzeugtyp angepasst werden

Es ist Aufgabe der Erfindung einen Radluftabweiser mit Halterung zu schaffen, der an seinem Halter austauschbar und trotzdem stabil befestigt ist.

### ZUSAMMENFASSUNG DER ERFINDUNG

Die Aufgabe wird gelöst mit einer aktiven Radluftabweiseranordnung für die Befestigung an einem Kraftfahrzeug, die mindestens einen Aktuator, Radluftabweiser für die Vorderräder des Kraftfahrzeugs und verschwenkbare Halterungen für die Radluftabweiser aufweist, wobei die Radluftabweiser reversibel an der Halterung angebracht sind.

Der verschwenkbare Radluftabweiser, der sich an der Vorderseite des Fahrzeugs unter der Karosserie befindet, ist in der Lage, die Aerodynamik des Fahrzeugs zu verändern. Der Radluftabweiser leitet den Luftstrom in der Vorderseite des Fahrzeugs am Vorderrad um, um die Aerodynamik des Fahrzeugs entweder hinsichtlich des Kraftstoffverbrauchs oder der Leistungsmerkmale zu verbessern.

Durch die beschriebenen Verbindungslösungen wird eine Verwendung des Standard-Systems an weiteren Fahrzeugmodellen nur durch Austausch des Radluftabweisers ermöglicht.

Vorteilhafterweise besitzt die Halterung Befestigungen entlang eines oberen Randes des Radluftabweisers. Die Halterung weist dabei entsprechende Ausbildungen auf, die der Kontur des oberen Randes des Radluftabweisers folgen.

Eine vorteilhafte Ausgestaltung ist realisiert, indem die Befestigungen in der Halterung durch Ausnehmungen mit Steg und integrierter Feder ausgebildet sind.

Dabei erfolgt die Befestigungen durch Eingriff von Laschen des Radluftabweisers in die Ausnehmungen, wobei die Lasche eine Nase und einen Anschlag aufweist. Eine weitere alternative Ausführungsform weist Lochlaschen am oberen Rand des Radluftabweisers auf und die Halterung bogenförmige Aufnahmen mit Schlitzen.

Zur Befestigung werden durch das Loch der Lochlasche und dem Schlitz der bogenförmigen Aufnahme Spreiznieten gesteckt.

### KURZBESCHREIBUNG DER ZEICHNUNGEN

Die vorliegende Erfindung wird durch die detaillierte Beschreibung und die zugehörigen Zeichnungen dargestellt, wobei:
Figur 1 ist eine Seitenansicht eines Fahrzeugs mit einer aktiven Radluftabweiseranordnung in einer ausgefahrenen Position;
Figur 2 ist eine perspektivische Ansicht einer aktiven Radluftabweiseranordnung,
Figur 3 und Figur 4 zeigt einen erste Ausführungsform einer Verbindung,
Figur 5 und 6 und 7 zeigen einen zweite Ausführungsform einer Verbindung.

### DETAILLIERTE BESCHREIBUNG DER AUSFÜHRUNGSFORMEN

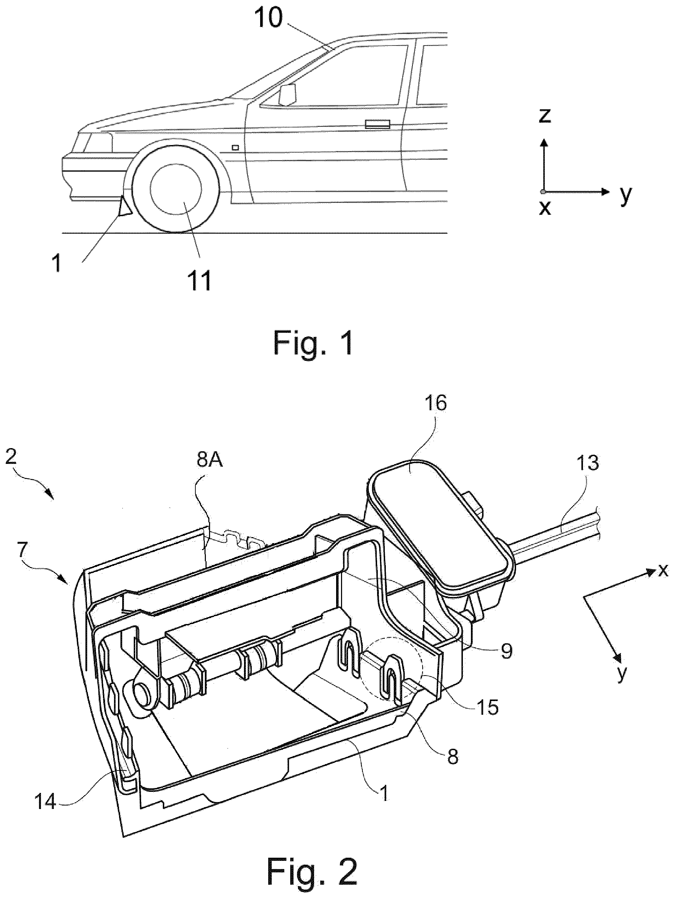

Figur 1 ist eine Seitenansicht eines Fahrzeugs mit einem Vorderrad 11. Schematisch eingezeichnet ist einen Radluftabweiser 1, der sich unterhalb des Stoßfängers in Richtung Vorderrad 11 erstreckt und an der Karosserie oder an tragenden Bauteilen des Fahrzeugaufbaus, verschenkbar um die x-Achse gelagert ist. In der

Figur 1 ist der aktivierte Zustand dargestellt. Im deaktivierten Zustand verschwindet der Radluftabweiser im Fahrzeug und engt die Bodenfreiheit des Fahrzeugs nicht mehr ein.

Der Radluftabweiser 1 ist dabei als Anströmungskörper ausgeführt, wie beispielsweise in der WO 2017/153 662 A1 gezeigt. Der Radluftabweiser ist in diesem Beispiel als Körper mit einer Kreissektionsfläche zur Anströmung ausgebildet und um eine Querachse, die einer Begrenzung des Anströmkörpers entspricht, verschwenkbar und unlösbar in einer Halterung gelagert.

In Figur 2 wird schematisch ein Teil des Radluftabweisersystems 2 für ein Rad dargestellt. Das gesamte System besteht aus zwei Radluftabweisern 1 mit verschwenkbaren Halterungen 7 für die Radluftabweiser 1 und mindestens einem Aktuator 16, sowie gegebenenfalls einer Welle 13.

Die Halterung 7 ist in diesem Beispiel aus einem flachen, aber strukturierten und mit Rändern versehenen Boden 8 aufgebaut, an dem Arme 9 angreifen. Die Arme 9 stehen mit einer Welle 13 in Verbindung. Über die Welle 13 wird die gesamte Halterung 7 um die Achse der Welle 13 verdreht und der daran befestigte Radluftabweiser 1 verschwenkt. Die Befestigung 15 des Radluftabweisers 1 an der Halterung 7 erfolgt entlang des oberen Randes 14 des kappenartigen Anströmkörpers des Radluftabweisers 1, der im Ausführungsbeispiel eine in etwa v-förmige Kontur des oberen Randes 14 aufweist.

Die Befestigungen 15 findet sich an mehreren Stellen der Halterung 7 verteilt und verbinden reversibel den Rand 8A des Bodens 8 mit dem Radluftabweiser 1.

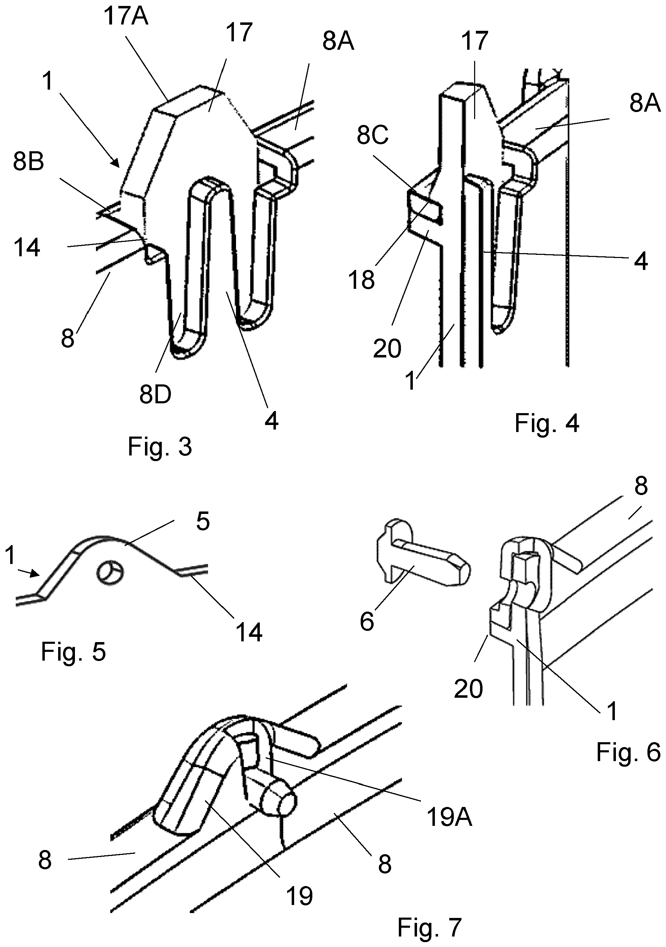

Die Figur 3 und Figur 4 zeigen eine erste Ausführungsform der Befestigung 15.

In Figur 3 ist der Boden 8 der Halterung 7 mit seinem Rand 8A dargestellt. In diesem Rand 8A sind Ausnehmungen 8B ausgebildet, wobei auf der einen Seite der Ausnehmung 8B ein Steg 8C und auf der anderen Seite der Ausnehmung 8B eine integrierte Feder 4 ausgebildet ist. Die integrierte Feder 4 besitzt die Form einer Zunge und wird durch zwei schlitzartige Einkerbung in 8D gebildet.

In die Ausnehmung 8B wird eine Lasche 17 des Radluftabweisung 1 eingeschoben. Die Lasche 17 weist, wie in Figur 4 dargestellt, eine Nase 18 auf, die über den Steg 8C des Randes 8A des Bodens 8 hinausragt. Beim Einführen der Lasche 17 in die Ausnehmung 8B des Randes 8A verrastet die Lasche 17 durch ihre Nase 18 und einen Anschlag 20 unter dem Druck der integrierten Feder 4 mit dem Boden 8 der Halterung 7. Die Lasche 17 kann durch Druck auf ihre Spitze 17A in Richtung auf die integrierte Feder 4 entlastet werden. Die Spitze 17 A der Lasche 17 ist zum besseren Zentrieren und Einführen beidseitig abgeschrägt.

Mit diesem Aufbau ist es möglich den Radluftabweiser 1 sehr sicher entlang der Kontur 14 des Radluftabweisers mit der Halterung, speziell mit dem Boden 8 zu verbinden.

Das Entrasten ist ebenfalls auf einfache Art und Weise möglich und erlaubt den Austausch des Radluftabweisers 1.

Die Figuren 5-7 zeigen eine alternative Ausführungsform der Befestigung 15 des Radluftabweisers an der Halterung 7. Dabei ist sind am Radluftabweiser 1 Lochlaschen 5 entlang des oberen Randes 14 an mehreren Stellen vorgesehen. Auf dem Rand 8A des Boden 8 sind bogenförmige Aufnahmen 19 vorgesehen, die so ausgebildet sind, um die Aufnahme der Lochlaschen 5 zu ermöglichen. Der Radluftabweiser 1 wird mit seinen Lochlaschen 5 in die bogenförmigen Aufnahmen 19 geschoben, wobei diese längliche Schlitze 19A aufweisen. Wenn der Radluftabweiser 1 hinreichend weit in die bogenförmigen Aufnahmen 19 gesteckt ist, wobei er wiederum einen Anschlag 20 aufweist, korrespondiert das Loch der Lochlasche 5 mit dem Schlitz 19 A der bogenförmigen Aufnahme 19. In das Loch der Lochlasche 5 wird ein Spreizniet 6 eingebracht, der die beiden Bauteile fest miteinander verbindet, aber entfernbar ist.

Für die Befestigung des Radluftabweisers können die beiden alternativen Ausbildungsformen auch miteinander gemischt werden.

### Bezugszeichenliste

- 1: Radluftabweiser
- 2: aktive Radluftabweisanordnung
- 3: Rasthaken
- 4: integrierte Feder
- 5: Lochlaschen
- 6: Spreizniet
- 7: Halterung
- 8: Boden
- 8A: Rand
- 8B: Ausnehmung
- 8C: Steg
- 8D: Einkerbung
- 9: Arme
- 10: Fahrzeug
- 11: Vorderrad
- 13: Welle
- 14: oberer Rand
- 15: Befestigung
- 16: Aktuator
- 17: Lasche
- 17A: Spitze
- 18: Nase
- 19: bogenförmige Aufnahme
- 19A: Schlitz
- 20: Anschlag

## Patentansprüche

1. Aktive Radluftabweiseranordnung (2) für die Befestigung an einem Kraftfahrzeug, die mindestens einen Aktuator (16), Radluftabweiser (1) für die Vorderräder (11) des Kraftfahrzeugs und verschwenkbare Halterungen (7) für die Radluftabweiser (1) aufweist, wobei die Halterung (7) aus einem flachen, strukturierten und mit Rändern versehenen Boden (8) aufgebaut ist, an dem Arme (9) angreifen, die mit einer Welle (13) in Verbindung stehen, so dass über die Welle (13) die gesamte Halterung (7) um die Achse der Welle (13) verdreht und der daran befestigte Radluftabweiser (1) verschwenkt wird, **dadurch gekennzeichnet, dass** die Radluftabweiser (1) reversibel an der jeweiligen Halterung (7) angebracht sind, so dass Entrasten auf einfache Art und Weise möglich ist.

2. Aktive Radluftabweiseranordnung (2) nach Anspruch 1, **dadurch gekennzeichnet, dass** die jeweilige Halterung (7) Befestigungen (15) entlang eines oberen Randes (14) des Radluftabweisers (1) aufweist.

3. Aktive Radluftabweiseranordnung (2) nach Anspruch 2, **dadurch gekennzeichnet, dass** die Befestigungen in der Halterung (7) durch Ausnehmungen (8B) gebildet ist, wobei auf der einen Seite der Ausnehmung (8B) ein Steg (8C) und auf der anderen Seite der Ausnehmung (8B) eine integrierte Feder (4) ausgebildet ist, die die Form einer Zunge besitzt.

4. Aktive Radluftabweiseranordnung (2) nach Anspruch 3, **dadurch gekennzeichnet, dass** die Befestigungen (15) durch Eingriff von Laschen (17) des Radluftabweisers (1) in die Ausnehmungen (8B) erfolgen.

5. Aktive Radluftabweiseranordnung (2) nach Anspruch 4, **dadurch gekennzeichnet, dass** die Laschen (17) jeweils eine Nase (18), die über den Steg (8C) des Randes (8A) des Bodens (8) hinausragt, und einen Anschlag (20) aufweist.

6. Aktive Radluftabweiseranordnung (2) nach Anspruch 1 oder 2, **dadurch gekennzeichnet, dass** der Radluftabweiser (1) Lochlaschen (5) an seinem oberen Rand (14) aufweist.

7. Aktive Radluftabweiseranordnung (2) nach Anspruch 6, **dadurch gekennzeichnet, dass** auf dem Rand (8A) des Bodens (8) der Halterung (7) bogenförmige Aufnahmen (19) sind, die längliche Schlitzen (19A) aufweisen.

8. Aktive Radluftabweiseranordnung (2) nach Anspruch 6 oder 7, **dadurch gekennzeichnet, dass** durch das Loch der Lochlasche (5) und den Schlitz (19A) der bogenförmigen Aufnahme (19) Spreiznieten (6) gesteckt sind.

## Claims

1. Active wheel air deflector assembly (2) for the attachment to a motor vehicle, which comprises at least one actuator (16), wheel air deflectors (1) for the front wheels (11) of the motor vehicle, and swivelable holders (7) for the wheel air deflectors (1), wherein the holder (7) is made of a base (8), which is flat, structured, and is provided with edges, and at which arms (9) engage, which are connected to a shaft (13), so that the entire holder (7) is twisted, with the aid of the shaft (13), about the axis of the shaft (13), and the wheel air deflector (1) attached thereto is swiveled, **characterized in that** the wheel air deflectors (1) are reversibly mounted on the particular holder (7), so that detachment is easily possible.

2. Active wheel air deflector assembly (2) according to Claim 1, **characterized in that** the particular holder (7) comprises attachments (15) along an upper edge (14) of the wheel air deflector (1).

3. Active wheel air deflector assembly (2) according to Claim 2, **characterized in that** the attachments in the holder (7) are formed by recesses (8B), wherein a ridge (8C) is formed on the one side of the recess (8B) and an integrated spring (4), which has the shape of a tongue, is formed on the other side of the recess (8B).

4. Active wheel air deflector assembly (2) according to Claim 3, **characterized in that** the attachments (15) take place via engagement of tabs (17) of the wheel air deflector (1) into the recesses (8B).

5. Active wheel air deflector assembly (2) according to Claim 4, **characterized in that** the tabs (17) each comprise a projection (18), which protrudes over the ridge (8C) of the edge (8A) of the base (8), and a stop (20).

6. Active wheel air deflector assembly (2) according to Claim 1 or 2, **characterized in that** the wheel air deflector (1) comprises perforated tabs (5) at its upper edge (14).

7. Active wheel air deflector assembly (2) according to Claim 6, **characterized in that** curved seats (19), which comprise elongate slots (19A), are on the edge (8A) of the base (8) of the holder (7).

8. Active wheel air deflector assembly (2) according to Claim 6 or 7, **characterized in that** expanding rivets (6) are inserted through the hole of the perforated tab (5) and the slot (19A) of the curved seat (19).

## Revendications

1. Agencement actif de déflecteur d'air de roue (2) destiné à être fixé à un véhicule automobile et qui présente au moins un actionneur (16), des déflecteurs d'air de roue (1) pour les roues avant (11) du véhicule automobile et des supports pivotants (7) pour les déflecteurs d'air de roue (1), le support (7) étant composé d'un fond (8) plat, structuré et muni de bords, au niveau duquel attaquent des bras (9) qui sont en communication avec un arbre (13) de sorte que l'arbre (13) permet de faire tourner le support (7) tout entier autour de l'axe de l'arbre (13) et de faire pivoter le déflecteur d'air de roue (1) fixé à celui-ci,
**caractérisé en ce que** les déflecteurs d'air de roue (1) sont rattachés de manière réversible au support respectif (7) de sorte qu'un détachement est possible facilement.

2. Agencement actif de déflecteur d'air de roue (2) selon la revendication 1, **caractérisé en ce que** le support respectif (7) présente des fixations (15) le long d'un bord supérieur (14) du déflecteur d'air de roue (1).

3. Agencement actif de déflecteur d'air de roue (2) selon la revendication 2, **caractérisé en ce que** les fixations dans le support (7) sont formées par des évidements (8B), une entretoise (8C) étant formée sur un côté de l'évidement (8B), et un ressort intégré (4) qui présente la forme d'une lame étant réalisé sur l'autre côté de l'évidement (8B).

4. Agencement actif de déflecteur d'air de roue (2) selon la revendication 3, **caractérisé en ce que** les fixations (15) sont effectuées par la mise en prise de pattes (17) du déflecteur d'air de roue (1) dans les évidements (8B).

5. Agencement actif de déflecteur d'air de roue (2) selon la revendication 4, **caractérisé en ce que** les pattes (17) présentent respectivement un bec (18), qui dépasse de l'entretoise (8C) du bord (8A) du fond (8), et une butée (20).

6. Agencement actif de déflecteur d'air de roue (2) selon la revendication 1 ou 2, **caractérisé en ce que** le déflecteur d'air de roue (1) présente des pattes à trou (5) au niveau de son bord supérieur (14).

7. Agencement actif de déflecteur d'air de roue (2) selon la revendication 6, **caractérisé en ce que** sur le bord (8A) du fond (8) du support (7) se trouvent des logements en forme d'arc (19) qui présentent des fentes allongées (19A).

8. Agencement actif de déflecteur d'air de roue (2) selon la revendication 6 ou 7, **caractérisé en ce que** des rivets à expansion (6) sont insérés à travers le trou de la patte à trou (5) et la fente (19A) du logement (19) en forme d'arc.
